# EUROPÄISCHE PATENTSCHRIFT

(11) **EP 1 156 570 B1**
(45) Veröffentlichungstag und Bekanntmachung des Hinweises auf die Patenterteilung: **08.12.2004**
(21) Anmeldenummer: 01111870.0
(22) Anmeldetag: 16.05.2001
(51) Int. Cl.: H02G 9/10, E02D 29/12

(54) **Verteilschacht und Schachtwandmodul**
Distribution manhole and manhole wall module
Trou d'homme de distribution et module de paroi de trou d'homme

(30) Priorität: 16.05.2000 DE 20008800 U
(43) Veröffentlichungstag der Anmeldung: 21.11.2001
(73) Patentinhaber: Kessel GmbH, 85101 Lenting (DE)
(72) Erfinder: Kessel, Bernhard, 85101 Lenting (DE)
(74) Vertreter: Grünecker, Kinkeldey, Stockmair & Schwanhäusser Anwaltssozietät

(56) Entgegenhaltungen:
- EP-A- 0 151 905
- DE-A- 2 145 817
- DE-A- 3 400 576
- DE-A- 4 122 299
- DE-C- 446 058
- DE-C- 4 223 229
- DE-U- 6 922 513
- DE-U- 8 126 653
- DE-U- 9 208 786
- US-A- 5 791 098

## Beschreibung

Die Erfindung betrifft einen Verteilschacht gemäß Oberbegriff des Anspruchs 1 sowie einen Schachtwandmodul gemäß Oberbegriff des Anspruchs 9.

Aus DE 41 22 299 A und EP 0 151 905 A bekannte, aus Kunststoff-Schachtsegmenten gebaute Schächte, die an sich für die Abwassertechnik bestimmt sind, können mit geringfügigen Modifikationen als Verteilschächte benutzt werden, wenn der Verteilschacht vor dem Verlegen der Stränge gebaut wird, da dann die Stränge durch Strangöffnungen nachträglich einzuführen und an Knotenpunkten zu verbinden sind. Dabei sind Schachtdurchmesser bis zu 2,0 m und Strangdurchmesser bis z.B. etwa 100 mm durchaus möglich. Da Verteilschächte, insbesondere im Erdboden, mit der Zeit undicht werden oder zerfallen, die Knotenpunkte und Stränge im Verteilschacht oftmals vor Wasser geschützt bleiben müssen, und das Lösen der Knotenpunkte bzw. Entfernen der Kabelstränge zum Einbauen eines neuen Verteilschachts einen zu großen Aufwand erfordert, besteht erheblicher Bedarf, einen funktionsfähigen Verteilschacht ohne Lösen der Knotenpunkte und/oder Freilegen gelöster Stränge durch einen neuen Verteilschacht ersetzen zu können. Dies ist mit den Schächten der DE 41 22 299 A und EP 0 151 905 A nicht möglich.

Aus DE 21 45 817 A ist es bereits bekannt, aus vorgefertigten, mosaikartig zusammengesetzten Betonelementen mit Mörtelfugen und/oder Fugenfüllern einen Verteilschacht um festverlegte Stränge zu bauen.

Der gattungsgemäße Verteilschacht der US 5 791 098 A, die als nächstliegenden Stand der Technik angesehen wird, dient zur Aufnahme wenigstens eines Knotenpunkts mehrerer Stränge wie Kabel, Rohre, Leitungen oder dgl., oder im Erdboden versenkter Strom- oder Telefonkabel. Der Verteilschacht ist auch nachträglich um bereits verlegte Stränge aufzubauen. Ein vom Aufsatzteil des Verteilschachts zu dessen Bodenteil durchgehender, einziger Schachtwandabschnitt mit rechteckigem, rundem, ovalem oder hexagonalem Umriss ist aus mehreren, in Umfangsrichtung über Fügeflansche verbundenen Kunststoff-Formteilen (aus Polyurethan) zusammengebaut. Wenigstens ein untenliegender Fügeflansch eines Formteils hat eingeformte, durch Bogenflansche ausgekleidete Strangöffnungsteile, die mit korrespondierenden Strangöffnungsteilen im Bodenteil des Verteilschachtes runde Strangöffnungen bilden. Der Verteilschacht ist nicht wasserdicht gebaut und kann nur unten platzierte Stränge aufnehmen.

Weiterer Stand der Technik ist enthalten in: DE 92 087 86 U, DE 42 23 229 C, DE 446 058 C, DE 34 00 576 A, DE 81 26 653 U, DE 69 22 513 U, DE 69 22 513 U, DE 19 23 601 A und DE 371 055 C.

Der Erfindung liegt die Aufgabe zugrunde, einen universell einsetzbaren Verteilschacht sowie ein Schachtwandmodul zum Errichten eines Verteilschachts anzugeben, die es gestatten einen Verteilschacht mit großem Freiheitsgrad für die Positionierung der Stränge ohne Lösen eines Knotenpunktes bei schon verlegten Strängen mit geringem Arbeitsaufwand zu bauen.

Die gestellte Aufgabe wird mit den Merkmalen des Anspruchs 1 und den Merkmalen des Anspruchs 9 gelöst.

Da die Stoßfuge zwischen den mindestens zwei in Richtung der Schachtachse aufeinandergesetzten Schachtwandmodulen die jeweilige Strangöffnung teilt, können die Schachtwandmodule um verlegte Stränge herum zu einer Schachtwand beliebig großer Höhe zusammengesetzt werden. Um einen Strang in der um ihn geschlossenen Strangöffnung sicher zu haltern oder gegebenenfalls auch abzudichten, oder ein den Strang umgebendes Leerrohr zu fassen, ist jede Strangöffnung mit einem Rohrstutzen aus zwei in der Stoßfuge der Schachtwandmodule zusammengesetzten, weit nach außen ragenden Halbschalen ergänzt, die in den Strangöffnungsteilen angeordnet oder sogar mit diesen einstückig sind. Eine gegebenenfalls notwendige Abdichtung wird sowohl zwischen den zusammengesetzten Schachtwandmodulen als auch zwischen diesen und dem Strang hergestellt. Bei einem Bodenverteilschacht braucht beispielsweise nur eine Baugrube freigelegt zu werden, wie sie zum Beseitigen des alten Verteilschachts und zum Manipulieren mit den Schachtwandmodulen zwischen den verlegten Strängen erforderlich ist. Dabei wird der Schachtwandabschnitt aus mehreren Ringen entlang der Schachtachse zusammengesetzt. Jede Strangöffnung ist zwischen zwei Ringen begrenzt. Die Ringe können rund oder vieleckig sein. Strangöffnungen können in beliebiger Verteilung um die Schachtachse und mit unterschiedlichen oder gleichen Durchmessern vorgesehen sein. Wo immer eine Strangöffnung gebraucht wird, wird diese durch zwei aneinanderstoßende Ringe, deren Öffnungsteile, und die Halbschalen erst beim Aufbauen vervollständigt. Falls jeder Ring ein in Umfangsrichtung einstückiger Schachtwandmodul ist, lassen sich die Module gut stapeln, falls sie konisch ausgebildet sind. Da jedoch ab bestimmten Schachtdurchmessern die einstückigen Ringe zu aufwendig und teuer herzustellen sind, wird vorgesehen, jeden Ring in Umfangsrichtung aus einzelnen Ringsegmenten zusammenzufügen. Die Umfangs-Stoßfugen zwischen den Ringsegmenten können abgedichtet werden. Gegebenenfalls sind in den in etwa vertikalen Stoßfugen zwischen den Ringsegmenten auch Strangöffnungsteile eingeformt. Der Vorzug wird jedoch Strangöffnungsteilen entlang der Ringumfangsränder der Ringsegmente gegeben. Für einen Schachtwandabschnitt mit wenigstens einer Strangöffnung oder mit mehreren in einer Höhe liegenden Strangöffnungen ist des zweckmäßig, jeweils mindestens zwei Ringe oder Ringsegmente in Richtung der Schachtachse zusammenzubauen. Die oberen und unteren, dann durchgehenden Randbereiche sind über die Fügeflansche mit entsprechenden durchgehenden Fügeflanschen in den Randbereichen weiterer Schachtwandabschnitte oder dem Bodenteil bzw. dem Schachtaufsatz gut zusammenzubauen und auch abzudichten, falls dies erforderlich sein sollte.

Der Schachtwandmodul passt zu anderen Modulen, um baukastenartig den an die jeweiligen Strangverlegebedingungen angepassten Verteilschacht erstellen zu können. In den Strangöffnungen kann, falls gewünscht, eine Abdichtung um den jeweiligen Strang oder dessen Leerrohr hergestellt werden, da jede Strangöffnung aus zwei von gegenüberliegenden Seiten an den Strang angelegten Öffnungsteilen gebildet wird. Kunststoffformteile haben den Vorteil geringen Gewichts bei Manipulationen beim Aufbau des Verteilschachts, bieten lange Haltbarkeit, hohe Formgenauigkeit, gute Passgenauigkeit und platzsparende Stapelbarkeit. Im Hinblick auf eine wirksame Abdichtung oder Halterung des Stranges oder eines durch die Strangöffnung reichenden Leerrohres für den Strang, ist im Schachtwandmodul eine den Öffnungsteil nach außen verlängemde Halbschale vorgesehen, die mit der Halbschale des anstoßenden Schachtwandmoduls zu einem Halterohrstutzen verbindbar ist.

Ein Schachtwandabschnitt, der mindestens zwei Strangöffnungen oder zwei Strangöffnungsreihen in unterschiedlichen Höhenlagen benötigt, ist zweckmäßig aus jeweils mindestens drei Ringen oder Ringsegmenten in Richtung der Schachtachse zusammengebaut, derart, dass in der Stoßfuge zwischen jeweils zwei Ringen oder Ringsegmenten eine oder mehrere Strangöffnungen begrenzt werden. Zum Zusammenbauen des Schachtwandabschnittes werden nur zwei unterschiedliche Ringe oder Ringsegmenttypen benötigt. Diese können baukastenartig in beliebiger Anzahl miteinander kombiniert werden, um mehr als zwei Strangöffnungen oder Strangöffnungsreihen in unterschiedlichen Höhen zu formen. Der eine Ring- oder Ringsegmenttyp besitzt einen durchgehenden Umfangsrandbereich und an seinem gegenüberliegenden Randbereich mindestens einen Öffnungsteil. Der zweite Ring- oder Ringsegmenttyp besitzt an beiden Umfangsrandbereichen jeweils wenigstens einen Öffnungsteil. Die Teilung zwischen den Öffnungsteilen der Ringe oder Ringsegmente der ersten und zweiten Typen stimmt überein.

Die im zweiten Ring- oder Ringsegmenttyp an dessen gegenüberliegenden Umfangsrändern vorgesehenen Öffnungsteile können in Richtung der Schachtachse übereinanderliegen oder in Umfangsrichtung zueinander versetzt sein. Im erstgenannten Fall wird für den Ring bzw. das Ringsegment eine größere Höhe erforderlich als im zweiten Fall, da im zweiten Fall die in Umfangsrichtung zueinander versetzten Öffnungsteile einander in Richtung der Schachtachse sogar überlappen können.

Dabei ist es zweckmäßig, zum Fassen und/oder Abdichten des Strangs bzw. dessen Leerrohrs den aus den beiden Halbschalen gebildeten Rohrstutzen zu verwenden.

Im Hinblick auf hohe Gestaltfestigkeit des Verteilschachts werden aneinanderstoßende Schachtwandmodule über die Fügeflansche und Zentrierelemente aneinander formschlüssig zentriert und über Fügespannelemente, vorzugsweise Spannschrauben oder Spannkeile, gegeneinander gespannt. Diese belastbare und einfach abzudichtende Verbindungsweise ergibt einen fast monolithischen, modular gebauten Verteilschacht.

Nicht durch einen Strang besetzte Strangöffnungen in der Schachtwand werden durch einen Stopfen dicht verschlossen. Der Stopfen bietet die Möglichkeit nach Entnahme später einen weiteren Strang einziehen zu können.

Falls es notwendig sein sollte, die Schachtwand wasserdicht auszubilden, sind an den Fügeflanschen integrierte Stoßfugen-Dichtmittel oder Aufnahmen für Dichtmittel vorgesehen. Die Dichtheit wird beim Zusammenbauen der Schachtwandmodule miteinander und um die Stränge hergestellt.

Um die fallweise notwendige Abdichtung der Strangöffnung einfach zu erzielen, sollte innen im Bogenflansch bzw. an der Halbschale wenigstens ein bandförmiger, längsgerippter Dichtstreifen umfänglich angeordnet sein. Dieser könnte in einer Aufnahme gehaltert werden oder voll integriert sein, z.B. eingespritzt. Die Rippung des Dichtstreifens passt z.B. in die Rippen des üblicherweise vorgesehenen Leerrohres mit Rippenstruktur.

Die Ausbildung des Schachtwandmoduls als Kunststoff-Spritzformteil gewährleistet gute Maßgenauigkeit. Auch die Schleudergusstechnik kann angewandt werden. Für erforderliche Dichtfunktionen und Haltefunktionen benötigte Gestaltungsmerkmale werden von vornherein eingeformt. Zweckmäßig sind auch die Dichtmittel, die in den Stoßfugen und/oder um den Strang wirken müssen, aus elastischem Kunststoff direkt an den Schachtwandmodul angespritzt, oder an die Halbschale, beispielsweise in einem Injektions-Umsetz-Formwerkzeug. Dies bedeutet, dass zunächst der Schachtwandmodul aus festem Kunststoff gespritzt und dann das Dichtmittel aus weicherem bzw. elastischem Kunststoff angespritzt und mit dem Schachtwandmodul einstückig verbunden wird, damit es fester Bestandteil desselben ist.

Anhand der Zeichnung werden Ausführungsformen des Erfindungsgegenstandes erläutert. Es zeigen:
- Fig. 1: schematisch zwei Schachtwandmodule zur Erstellung eines Schachtwandabschnittes eines Verteilschachts,
- Fig. 2: Zubehörteile der Schachtwandmodule,
- Fig. 3: die Schachtwandmodule von Fig. 1 vor dem Zusammenfügen,
- Fig. 4: die zu dem Schachtwandabschnitt zusammengefügten Schachtwandmodule der Fig. 3,
- Fig. 5: zu drei Ringen zusammengebaute Ringsegment-Schachtwandmodule vor dem Aufbauen eines Schachtwandabschnittes einer anderen Ausführungsform eines Verteilschachts,
- Fig. 6: den fertigen Schachtwandabschnitt aus den Ringen der Fig. 5,
- Fig. 7: zwei als Ringsegmente wie in den Fig. 5 und 6 gezeigt ausgebildete Schachtwandmodule mit Zubehörteilen vor dem Zusammenfügen, um nicht dargestellte Stränge, und
- Fig. 8: eine Perspektivansicht einer weiteren Ausführungsform eines modular mit mehreren Schachtwandmodulen gebauten Verteilschachts.

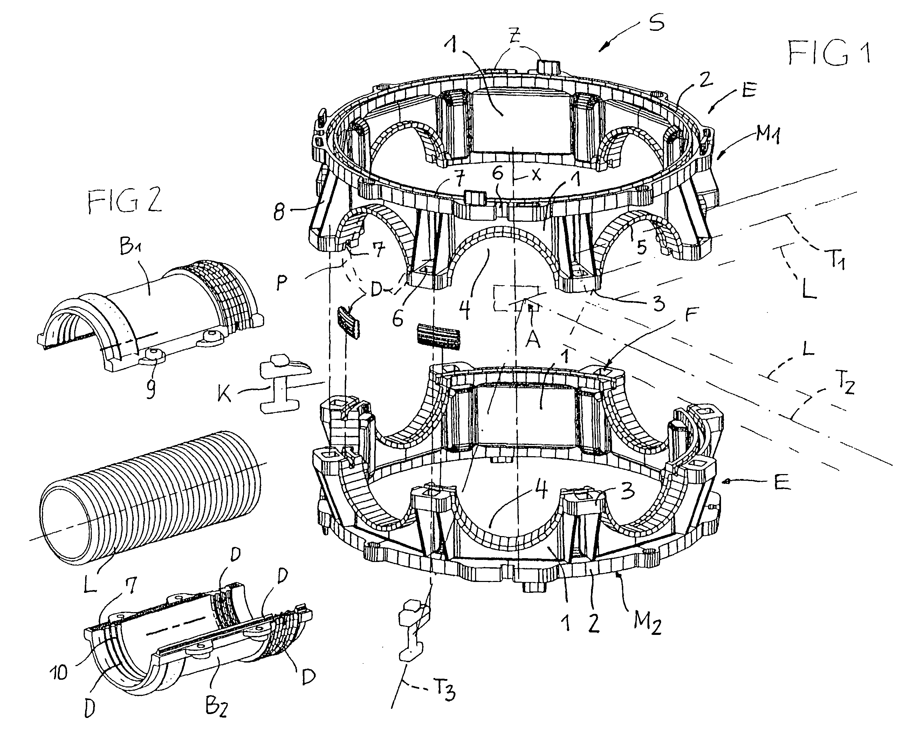

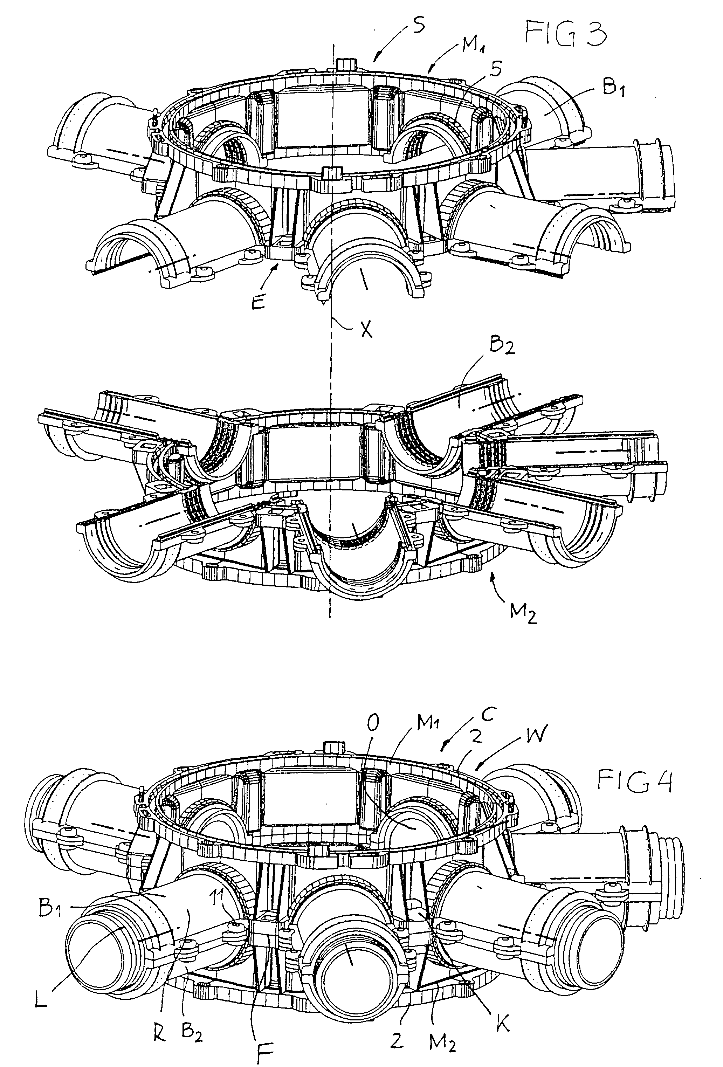

In Fig. 1 sind zwei identische Schachtwandmodule M₁ und M₂, jeweils mit der Form eines runden Ringes E, als Kunststoff-Spritzformteile ausgebildet, die in Richtung einer Schachtachse X zum Aufbauen eines in Fig. 4 gezeigten Schachtwandabschnitts C eines Verteilschachts S zusammensetzbar sind. Die beiden Schachtwandmodule M₁, M₂ können auch von oben und von unten um schon verlegte Stränge T₁, T₂, T₃ zu einem Knotenpunkt A zusammengebaut werden. An diesem Schachtwandabschnitt C können weitere, nicht gezeigte Schachtwandabschnitte C oder ein Schachtaufsatz bzw. ein Schachtbodenteil (nicht gezeigt) angeschlossen werden. Die so gebaute Schachtwand kann wasserdicht sein, wobei auch die Stränge T₁ bis T₃ in ihren Strangöffnungen O abgedichtet sind. Auf diese Weise wird beispielsweise anstelle eines vorher entfernten, defekten Verteilschachts (nicht gezeigt) um die verlegten Stränge T₁ bis T₃ der neue Verteilschacht S sukzessive mit den einzelnen Schachtwandmodulen gebaut.

Jeder Schachtwandmodul M₁, M₂ weist Wandflächen 1, einen durchgehenden Fügeflansch zum Anschließen weiterer Schachtwandmodule (oder eines Aufsatzteils oder Bodenteils) und einen durch Öffnungsteile 4 unterbrochenen Fügeflansch 3 auf. In Umfangsrichtung verteilt sind mehrere halbkreisförmige Strangöffnungsteile 4 geformt, die jeweils durch Bogenflansche 5 ausgekleidet sind. Die Anzahl und Verteilung der Öffnungsteile 4 ist beliebig; es können auch mehr oder weniger als gezeichnet vorgesehen sein. In den Fügeflanschen 2, 3 sind Aufnahmen 7 für Stoßfugen-Dichtmittel D geformt und Zentriermittel Z vorgesehen, um aneinanderstoßende Schachtwandmodule zu zentrieren und abzudichten. Die Zentriermittel Z sind angeformte oder eingesteckte Federn und dazu passende Zentrieröffnungen. Zwischen den Öffnungsteilen 4 sind Versteifungsrippen 8 geformt, die wie auch die Fügeflansche 2, 3 Befestigungseinrichtungen 6, 6' für Fügespannelemente K, beispielsweise Spannkeile oder Spannschrauben, aufweisen.

Die Stränge T₁ bis T₃ können Kabel, Rohre oder Leitungen sein. Gegebenenfalls sind die Stränge von Leerrohren L umgeben, die durch die Öffnungsteile 4 reichen und mittels nicht gezeigter, beispielsweise bandförmiger, umfänglich verlaufender Dichtmittel an den Bogenflanschen 5 abgedichtet werden, sobald die Schachtwandmodule M₁, M₂ gegeneinander verspannt sind.

Kurze Dichtmittel D können in Aufnahmen 7 in den Fügeflanschen 3 eingebracht werden, um auch in der von den Öffnungsteilen 4 unterbrochenen Stoßfuge abzudichten.

In Fig. 2 ist ein Endabschnitt eines Leerrohres L für wenigstens einen Strang angedeutet. Weiterhin sind zwei identische Halbschalen B₁, B₂ gezeigt, die um den jeweiligen Strang bzw. dessen Leerrohr zusammengefügt und in den Bogenflanschen 7 abgedichtet festgelegt werden, wobei sie vom Schachtwandabschnitt C über dessen Außenkontur nach außen ragen. Die Halbschalen B₁, B₂ besitzen an ihren Längsrändern Dichtmittel D oder Aufnahmen 7 für Dichtmittel D. Ferner sind Befestigungsmittel 9 angeformt, um die Halbschalen B₁, B₂ dicht gegeneinander zu spannen (Fig. 3). Im Inneren der Halbschalen sind Dichtmittel D, beispielsweise in Form längsgerippter Dichtstreifen 10, vorgesehen, wie auch an der Außenseite. Die innenliegenden Dichtstreifen 10 dienen zum Abdichten am Leerrohr L oder am jeweiligen Strang T₁ bis T₃. Der außenliegende Dichtstreifen dient zum Abdichten gegenüber dem Bogenflansch 5. Die Dichtstreifen 10 verlaufen in Umfangsrichtung. In Fig. 3 sind die Schachtwandmodule M₁, M₂ von Fig. 2 komplettiert durch die in die Öffnungsteile 4 eingesetzten Halbschalen B₁, B₂. Die Halbschalen können direkt einstückig mit den Schachtwandmodulen M₁, M₂ ausgebildet oder eingeschweißt oder eingeklebt oder auch nur lose eingesetzt sein.

In Fig. 4 ist der fertige Schachtwandabschnitt C gezeigt, wobei zu einem oder mehreren Knotenpunkten im Inneren der Verteilschachts S verlaufende Stränge T₁ bis T₃ von Fig. 1 nicht dargestellt sind. Durch Verbinden der Schachtwandmodule M₁, M₂, z.B. um die schon verlegten Stränge, werden in der Schachtwand W von den mit ihren offenen Seiten zueinander weisenden Öffnungsteilen 4 die Strangöffnungen O geformt. Eine durch keinen Strang besetzte Strangöffnung O wird durch einen Blindstopfen P (Fig. 1) verschlossen. In Fig. 4 sind die Fügespannelemente K angezogen, so dass der Schachtwandabschnitt C wasserdicht ist. Ferner sind die Halbschalen B₁, B₂ in den Bogenflanschen 5 abgedichtet und sind die Leerrohre L (oder die Stränge T₁ bis T₃) durch Verspannen der Rohrstutzen R bildenden Halbschalen B₁, B₂ mittels Spannelementen 11 gefasst und abgedichtet.

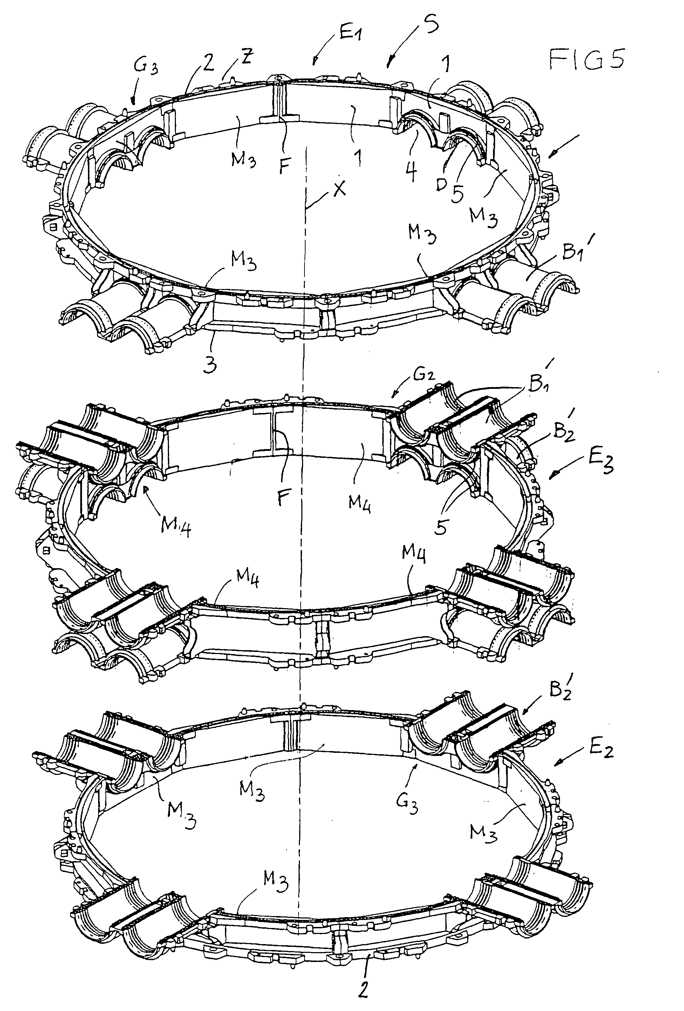

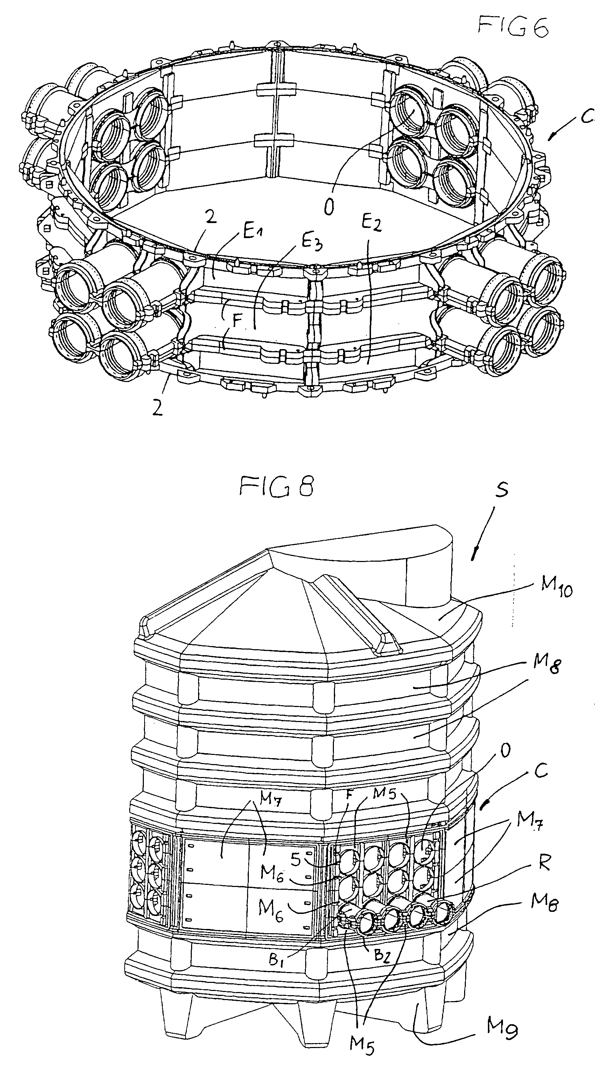

Zum Erstellen des in Fig. 6 gezeigten Schachtwandabschnitts C für einen Verteilschacht S mit größerem Durchmesser als in Fig. 4 sind einstückige Rundringe gegebenenfalls nicht zweckmäßig, so dass für einen Schachtdurchmesser von beispielsweise mehr als 1,0 m Schachtwandmodule M₃, M₄ in Form von Ringsegmenten G₂, G₃ zunächst zu in Fig. 5 gezeigten Vieleckringen E₁, E₂ und E₃ zusammengebaut werden. Dabei ergeben sich nicht nur umfängliche Stoßfugen F, sondern auch zwischen den einzelnen Ringsegmenten G₂, G₃ beispielsweise zur Schachtachse X parallele Stoßfugen F. Die Ringsegmente G₂, G₃ sind im Wesentlichen jeweils eben und ergeben deshalb eine Polygonform. Die Ringsegmente G₂, G₃ könnten alternativ bogenförmig ausgebildet sein, um zusammengebaut einen Rundring zu ergeben.

Jeder Vieleckring E₁ und E₂ ist in Fig. 5 aus vier Ringsegmenten G₂, G₃ zusammengebaut, deren jedes aus einem Mittelabschnitt mit zwei nebeneinanderliegenden Öffnungsteilen 4 und zwei Seitenteilen mit Wandflächen 1 besteht. In den Öffnungsteilen 4 sind quer miteinander verbundene Halbschalenpaare B₁' abgedichtet angeordnet oder einstückig angeformt, die nach außen über die Außenkontur des Schachtwandmoduls vorstehen und mit Dichtmitteln D ausgestattet sein können. Der Vieleckring E₂ ist identisch dem Vieleckring E₁, jedoch um 180° nach unten gedreht, so dass sein durchgehender Fügeflansch 2 nach unten weist.

Zwischen den Vieleckringen E₁ und E₂ ist wenigstens der eine Vieleckring E₃ vorgesehen, der aus mehreren, in vertikalen Stoßfugen F aneinandergefügten Schachtwandmodulen M₄ mit der Form der Ringsegmente G₂ zusammengebaut ist. Jeder Schachtwandmodul M₄ hat zwei Wandflächen 1 und einen mittleren Abschnitt, in welchem jeweils ein Paar oberer nebeneinanderliegender Öffnungsteile mit einem Halbschalenpaar B₁' und ein unteres Paar Öffnungsteile 4 mit einem Halbschalenpaar B₂' vorgesehen sind.

In Fig. 6 sind die Vieleckringe E₁, E₂, E₃ in Richtung der Schachtachse X zum Schachtwandabschnitt C zusammengebaut. Dieser hat insgesamt 16 Strangöffnungen O, die gruppenweise zueinander jeweils um 90° versetzt sind und in etwa radial zur F geteilt. An die oberen und unteren Fügeflansche 2 können weitere, nicht gezeigte Schachtwandmodule oder ein Schachtaufsatz oder ein Bodenteil angeschlossen werden.

Nachdem die Vieleckringe E₁ bis E₃ gegeneinander verspannt sind, und auch die Halbschalenpaare zu Rohrstutzenpaaren verbunden wurden, sind die darin enthaltenen Stränge bzw. Leerrohre abgedichtet und ist auch der Schachtwandabschnitt C wasserdicht.

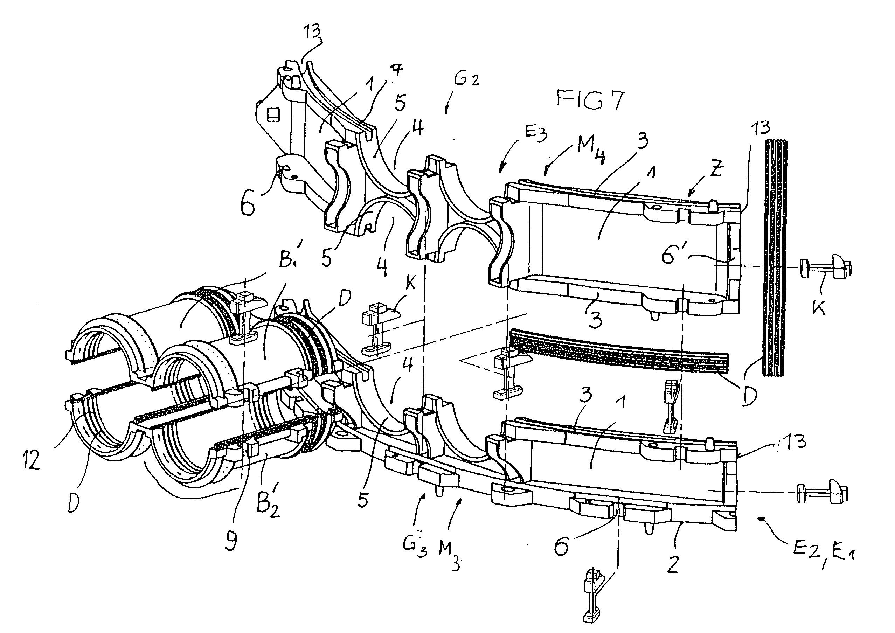

Fig. 7 zeigt in vergrößertem Maßstab den als Ringsegment G₂ ausgebildeten Schachtwandmodul M₄ zum Herstellen des Vieleckrings E₃ der Fig. 5 und 6, sowie das Ringsegment G₃ des Schachtwandmoduls M₃ zum Herstellen der ersten und zweiten Vieleckringe E₁, E₂, wobei Dichtmittel D und auch die Halbschalenpaare B₁' und B₂' noch nicht zusammengebaut angedeutet sind.

Im Ringsegment G₂ sind die in Richtung der Schachtachse X aufeinander ausgerichteten Paare der Öffnungsteile 4 von den sich jeweils über annähernd 180° erstreckenden Bogenflanschen 5 begrenzt. Der die Öffnungsteilpaare aufweisende Mittelabschnitt wird zu beiden Seiten von den Wandflächen 1 verlängert, die an mit Aufnahmen 7 für Dichtmittel D geformten Stoßflanschen 13 enden. Im Ringsegment G₂ liegen die Öffnungsteilpaare in Richtung der Schachtachse übereinander. Alternativ wäre es möglich, die nach oben offenen Öffnungsteilpaare in Umfangsrichtung versetzt gegenüber den nach unten offenen Öffnungsteilpaare anzuordnen, so dass auch das Ringsegment G₂ die gleiche Höhe haben könnte, wie das Ringsegment G₃. Es könnten pro Ringsegment G₂, G₃ auch nur ein Öffnungsteil 4 oder mehr als zwei Öffnungsteile 4 eingeformt sein. Das Ringsegment G₃ weist nur ein Paar nach oben offener Öffnungsteile 4 mit Bogenflanschen 5 auf, während ein untenliegender Fügeflansch 2 ohne Unterbrechung durchgeht. Die hier einstückigen Halbschalenpaare B₁' und B₂' lassen sich mit ihren Dichtmitteln D in den Bogenflanschen 5 der Öffnungsteile 4 dicht festlegen und werden über die Befestigungsmittel 9 mit in Fig. 4 gezeigten Spannelementen 11 gegeneinander gezogen, bis ihre innenliegenden Dichtmittel D die Abdichtung am Leerrohr bzw. am Strang herstellen. Die jeweiligen Dichtmittel D sind zweckmäßigerweise aus flexiblem Kunststoff extrudierte Profilstreifen mit innen- und/oder außenseitig längsverlaufenden Dichtlippen. Die Dichtmittel D können in die Aufnahmen 7 eingelegt und darin befestigt werden. Alternativ ist es möglich, z.B. auch in den Halbschalen bzw. Halbschalenpaaren B₁, B₂, B₁', B₂' die Dichtmittel D direkt anzuspritzen, z.B. in einem Injektions-Umsetzwerkzeug. Auch entlang der Längsränder der Halbschalen können angespritzte oder eingesetzte Dichtmittel vorgesehen sein.

Als Spannelemente K sind in Fig. 7 Spannkeile gezeigt, die zum Zusammenbauen der Ringsegmente G₂, G₃ in Umfangsrichtung und zum axialen Zusammenbau der Ringe E₁, E₂, E₃ in die Halterungen 6, 6' eingesetzt und verspannt werden. Optional werden Hilfswerkzeuge benutzt, um die jeweils gegeneinander zu spannenden Komponenten zunächst vorzuspannen, dann erst die Spannkeile einzusetzen, und dann erst die Spannkeile endgültig anzuziehen. Statt Spannkeilen könnten auch andere Fügespannelemente K benutzt werden, wie Spannschrauben oder Schnellspannelemente (nicht gezeigt).

Fig. 8 zeigt eine Hälfte eines Verteilschachtes S, der in einem Wandabschnitt C beispielsweise 48 Strangöffnungen O besitzt, die in Gruppen von jeweils vier auf drei in Richtung der Schachtachse X übereinanderliegende Ebene verteilt sind. Es ist für den Wandabschnitt C ein Zusammensetzprinzip mit Ringsegmenten gewählt, wie anhand der Fig. 5 bis 7 erläutert. Die Strangöffnungen O sind jeweils von Schachtwandmodulen M₅ und M₆ begrenzt, wobei alle Strangöffnungen O durch jeweils eine Stoßfuge geteilt sind. Die Schachtwandmodule M₅ sind ähnlich den Schachtwandmodulen M₃, während die Schachtwandmodule M₆ ähnlich den Schachtwandmodulen M₄ sind. In einigen der Strangöffnungen sind Halbschalen B₁, B₂ vorgesehen, während andere nur durch Bogenflansche 5 begrenzt sind. Vollwandbereiche werden durch plattenartige Schachtwandmodule M₇ gebildet. Oberhalb und unterhalb des Wandabschnitts C sind z.B. aus Ringsegmenten zusammengesetzte vieleckringförmige, vollwandige Schachtwandmodule M₈ angeordnet. Der Bodenteil des Verteilschachts S wird durch ein untenliegendes Schachtwandmodul M₉ gebildet, während der Schachtaufsatz durch ein Schachtwandmodul M₁₀ gebildet ist. Nicht benötigte Strangöffnungen O sind durch Blindstopfen verschlossen.

Zum Erstellen eines neuen Verteilschachts S anstelle eines alten wird zunächst der alte Verteilschacht demontiert, wobei die Umgebung des alten Verteilschachts ausgehoben wird. Die zu Knotenpunkten A verlegten Stränge T₁ bis T₃ bleiben an Ort und Stelle. Sobald die Baugrube gesäubert und gegebenenfalls ein ordnungsgemäßes Fundament gebaut ist, wird unten mit dem Aufbau des neuen Verteilschachts begonnen. Die Strangöffnungen bildenden Schachtwandmodule werden um die Stränge zusammengefügt und gegeneinander und an den Strängen oder deren Leerrohren abgedichtet. Danach werden weitere Schachtwandmodule einschließlich des Aufsatzteiles eingebaut, bis die gewünschte Schachthöhe erreicht ist. Dank des modularen Baukastenprinzips können auch mehr oder weniger als die gezeigten Stränge gehaltert werden. Es kann für die Strangöffnungen eine beliebige regelmäßige oder unregelmäßige Verteilung gewählt werden, entsprechend den Strangverläufen und -höhenlagen. Der Verteilschacht S ist jederzeit wieder abbaubar. Natürlich kann aus den Schachtwandmodulen ein komplett neuer Verteilschacht gebaut werden, in welchem Stränge nachträglich eingebaut werden. Die Schachtwandmodule sind zweckmäßig in Größen hergestellt (auch die Ringsegmente), die ein einfaches Manipulieren gestatten und keine Hebezeuge erfordern. Die ringförmigen Schachtwandmodule M₁, M₂ der Fig. 1 bis 4 können kegelig und dann ineinander stapelbar sein.

Bei den beschriebenen Ausführungsformen sind Maßnahmen vorgesehen, um die Schachtwand und/oder die Strangöffnungen um die Stränge abzudichten und einen wasserdichten Verteilschacht zu bauen. Im Sinne der Erfindung ist es jedoch durchaus möglich, den Verteilschacht ohne Dichtungsmaßnahmen und nicht wasserdicht zu bauen. Die Schachtwandmodule sind zweckmäßig Spritzguss-Formteile, z.B. aus Polyamid, Polypropylen, Polyurethan, Polyäthylen, oder ähnlichen Kunststoffen. Sie könnten alternativ in Schleudergusstechnik hergestellt sein.

## Patentansprüche

1. Verteilschacht (S) für mehrere von außen zu wenigstens einem Knotenpunkt (A) im Schachtinneren verlegte Stränge (T₁, T₂, T₃), insbesondere Kabel, Rohre, oder Leitungen, mit einer Kabelöffnungen (O) aufweisenden Schachtwand (W), die aus in Stoßfugen (F) mit Fügeflanschen (2, 3) aneinander gesetzten, eingeformte und von Bogenflanschen (5) ausgekleidete Strangöffnungsteile (4) enthaltenden Kunststoff-Schachtwandmodulen (M₁ bis M₆) zusammengesetzt und ober- und unterseitig zumindest mit einem Aufsatzteil und einem Bodenteil verbunden ist, **dadurch gekennzeichnet, dass** die Schachtwand (W) aus mindestens zwei mit ihren Fügeflanschen (2, 3) aufeinandergesetzten Schachtwandmodulen (M₁ bis M₈) besteht, die mit ihren zur Stoßfuge (F) offenen Strangöffnungsteilen (4) wenigstens eine gemeinsame, durch die Stoßfuge (F) geteilte Strangöffnung (O) begrenzen, dass in zumindest zwei gemeinsam die Strangöffnung (O) begrenzenden Öffnungsteilen(4)jeweüs eine über die Außenseitenkontur des Schachtwandmoduls vorstehende, von der Stoßfuge (F) begrenzte Halbschale (B₁, B₂, B₁', B₂') vorgesehen ist, die im Öffnungsteil (4) angebracht oder mit diesem einstückig ist, und dass jeder Schachtwandmodul (M₁ bis M₈) als Rund- oder Vieleckring (E, E₁ bis E₃) mit in der Schachtachse (X) liegender Ringachse in Umfangsrichtung einstückig oder aus in Umfangsrichtung mit ihren Fügeflanschen aneinander gefügten Ringsegmenten (G₂, G₃) geformt ist.

2. Verteilschacht nach Anspruch 1, **dadurch gekennzeichnet, dass** jeweils mindestens zwei Ringe oder Ringsegmente (G₂, G₃) in Richtung der Schachtachse zu einem Schachtwandabschnitt (C) mit oberen und unteren durchgehenden Fügeflanschen (2, 3) und wenigstens einer durch die Stoßfuge (F) geteilten, gemeinsamen Strangöffnung (O) zusammengebaut sind.

3. Verteilschacht nach Anspruch 1, **dadurch gekennzeichnet, dass** jeweils mindestens drei Schachtwandmodule (M₁, M₂, M₃, M₄) bildende Ringe oder Ringsegmente (G₂, G₃) in Richtung der Schachtachse (X) zu einem Schachtwandabschnitt zusammengefügt sind, von denen jeweils ein erstes Schachtwandmodul (M₁, M₃) wenigstens einen zum zweiten Schachtwandmodul (M₂, M₄) offenen Strangöffnungsteil (4), ein zweiter Schachtwandmodul (M₄) wenigstens zum ersten und zum dritten Schachtwandmodul (M₃) offene, zueinander entgegengesetzte Strangöffnungsteile (4), und der dritte Schachtwandmodul (M₁, M₂, M₃) wenigstens einen zum zweiten Schachtwandmodul offenen Strangöffnungsteil (4) aufweisen, und dass die zusammengebauten Schachtwandmodule mindestens zwei übereinanderliegende, jeweils durch die Stoßfuge (F) geteilte Strangöffnungen (O) begrenzen.

4. Verteilschacht nach Anspruch 3, **dadurch gekennzeichnet, dass** die zu den ersten und dritten Schachtwandmodulen offenen, zueinander entgegengesetzten Strangöffnungsteile (4) des zweiten Schachtwandmoduls (M₄) im zweiten Schachtwandmodul (M₄) in Richtung der Schachtachse (X) übereinanderliegen oder in Umfangsrichtung zueinander versetzt sind.

5. Verteilschacht nach Anspruch 1, **dadurch gekennzeichnet, dass** die beiden in der Stoßfuge (F) getrennten Halbschalen (B₁, B₂, B₁', B₂') einen einen Strang (T₁ bis T₃) bzw. ein den Strang enthaltendes Leerrohr (L) haltenden Rohrstutzen (R) formen.

6. Verteilschacht nach Anspruch 1, **dadurch gekennzeichnet, dass** in Richtung der Schachtachse (X) mit ihren Fügeflanschen (2, 3) aneinanderstoßende Schachtwandmodule über Zentrierelemente (Z) aneinander formschlüssig zentriert und über Fügespannelemente (K) gegeneinander gespannt sind.

7. Verteilschacht nach Anspruch 6, **dadurch gekennzeichnet, dass** die Fügespannelemente (K) Spannkeile oder Spannschrauben sind.

8. Verteilschacht nach Anspruch 1, **dadurch gekennzeichnet, dass** eine nicht durch einen Strang besetzte Strangöffnung (O) in der Schachtwand (W) durch einen herausnehmbaren Stopfen (P) verschlossen ist.

9. Schachtwandmodul aus Kunststoff für einen Verteilschacht (S) nach einem der Anprüche 1 bis 8, mit einem randseitigen Fügeflansch (2, 3) und wenigstens einem einseitig offenen, maximal 180° einer runden Strangöffnung (O) umfassenden, einen auskleidenden Bogenflansch (5) enthaltenden Öffnungsteil (4), **dadurch gekennzeichnet, dass** im Öffnungsteil (4) eine einstückig eingeformte oder eingesetzte Halbschale (B₁, B₂, B₁', B₂') vorgesehen ist, die über die Außenwandkontur des Schachtwandmoduls vorsteht.

10. Schachtwandmodul nach Anspruch 9, **dadurch gekennzeichnet, dass** die Fügeflansche (2, 3) integrierte Stoßfugendichtmittel (D) oder Aufnahmen (7) für Stoßfugendichtmittel (D) aufweisen.

11. Schachtwandmodul nach Anspruch 9, **dadurch gekennzeichnet, dass** die Halbschale (B₁, B₂, B₁', B₂') im Öffnungsteil (4) und in ihren Längsrandbereichen integrierte Stoßfugendichtmittel (D) oder Aufnahmen (7) für Stoßfugendichtmittel (D) aufweist.

12. Schachtwandmodul nach Anspruch 9, **dadurch gekennzeichnet, dass** im Bogenflansch oder/und innen in und/oder außen auf der Halbschale (B₁, B₂, B₁', B₂') wenigstens ein bandförmiger längsgerippter, fest integrierter oder in einer Aufnahme (7) gehaltener Dichtstreifen (12) angeordnet ist, der sich entlang des Bogenflansches (5) und/oder der Halbschale in Umfangsrichtung erstreckt.

13. Schachtwandmodul nach Anspruch 9, **dadurch gekennzeichnet, dass** der Schachtwandmodul (M₁ bis M₆) ein Kunststoff-Spritzformteil oder Schleudergussformteil ist und direkt angespritzte Stoßfugendichtmittel (D) und/oder Strangöffnungsdichtmittel (D) und/oder Dichtstreifen (12) aus elastischem Kunststoff aufweist.

## Claims

1. Distributor shaft (S) for several lines (T1, T2, T3) extending from the exterior to at least one junction point (A) inside said distribution shaft, particularly lines of cables, tubes or pipings, comprising a shaft wall (W) with line openings (O) for receiving said lines, said shaft wall (W) being built from plural plastic material - shaft wall modules (M1 - M6) mutually joined in butt joints (F) with abutting joint flanges (2, 3) at least some of said shaft wall modules being formed with line opening parts (4) lined by arcuate flanges (5), said shaft wall being connected at upper and lower sides to at least a manhole cover and to a bottom part, **characterised in that** said shaft wall (W) consists of at least two shaft wall modules (M1 - M6) put with their respective joint flanges (2, 3) on top of each other, said shaft wall modules forming with their line opening parts (4), which are open towards the butt joint (F), at least one line opening (O) divided by said butt joint (F), that in two of said opening parts (4) which pairwise define a line opening (O) a respective half shell (B1, B2, B1', B2') is provided which is bounded by said butt joint (F) and protrudes beyond the outside contour of said shaft wall module, that said half shell either is inserted in said opening part (4) or is unitary with said opening part (4), and that each shaft wall module (M1 - M6) is formed as a round ring or a polygon ring (E, E1 - E3) having its ring axis in the shaft axis (X) and being circumferentially unitary or being made from plural ring segments (G2, G3) which are interconnected in circumferential direction via joint flanges.

2. Distributor shaft as in claim 1, **characterised in that** at least two rings or ring segments (G2, G3) are interconnected in the direction of the shaft axis (X) to a shaft wall section (C) having upper and lower continuous joint flanges (2, 3) and defining at least one common line opening (O) divided by said butt joint (F).

3. Distributor shaft as in claim 1, **characterised in that** plural rings or ring segments (G2, G3) forming at least three shaft wall modules (M1, M2, M4) are interconnected in the direction of said shaft axis (X) to form a shaft wall section, of which a respective first shaft wall module (M1, M3) has at least one line opening part (4) which is open towards said second shaft wall module (M2, M4), of which a second shaft wall module (M4) has at least line opening parts (4) being open towards said first and said third shaft wall module (M3) and facing in opposite direction, and of which said third shaft wall module (M1, M2, M3) has at least one line opening part (4) being open towards said second shaft wall module, and that the interconnected shaft wall modules bounded by at least two line openings (O) each divided by the butt joint (F), said at least two line openings (O) being situated one above the other.

4. Distributor shaft as in claim 3, **characterised in that** said opposite line opening parts (4) of said second shaft wall module (M4) which open towards said first and third shaft wall modules lie above each other in the direction of said shaft axis (X) or are offset in circumferential direction in relation to one another.

5. Distributor shaft as in claim 1, **characterised in that** said two half shells (B1, B2, B1', B2') separated by said butt joint (F) are forming a tubulare (R) for holding either a cable line strand (T1 - T3) or a ductwork (L) containing a line strand.

6. Distributor shaft as in claim 1, **characterised in that** shaft wall modules abutting with their joint flanges (2, 3) to one another in the direction of shaft axis (X) are mutually centred with a form fit by centring elements (Z) and are tensioned against one another by joint tensioning elements (K).

7. Distributor shaft as in claim 7, **characterised in that** said joint tensioning elements (K) are tensioning wedges or tensioning screws.

8. Distributor shaft as in claim 1, **characterised in that** a line opening (O) in the shaft wall (W) which is non-occupied by a line strand is closed by a removable plug (P).

9. Shaft wall module made from plastic material for a distributor shaft (S) as in one of claims 1 to 8, comprising at its edge a joint flange (2, 3) and at least one opening part (4), which is open to one side and circumscribes maximum 180° of a round line strand opening (O), said opening part (4) being lined by an arcuate flange (5), **characterised in that** a half shell (B1, B2, B1', B2') is either unitarily formed with or inserted into said opening part (4), said half shell protruding beyond the outside contour of said shaft wall module.

10. Shaft wall modules as in claim 9, **characterised in that** said joint flanges (2, 3) either have integrated butt joint sealing means (D) or receiving structures (7) for inserting butt joint sealing means (D), respectively.

11. Shaft wall modules as in claim 9, **characterised in that** said half shell (B1, B2, B1', B2') is provided within said opening part (4) and in its longitudinal edge portions either with integrated butt joint sealing means (D) or is formed with receiving structures (7) for butt joint sealing means (D), respectively.

12. Shaft wall module as in claim 9, **characterised in that** at least one sealing strip (12) is provided firmly integrated or held in a receiving structure (7) inside said arcuate flange and/or inside in and/or outside on said half shell (B1, B2, B1', B2'), said sealing strip being band-shaped and having longitudinal ribs, and extending in circumferential direction along said arcuate flange (5) and/or said half shell.

13. Shaft wall module as in claim 9, **characterised in that** said shaft wall module (M1 - M6) is a plastic material injection moulded part or a centrifugal casting form part and has butt joint sealing means (D) and/or line opening sealing means (D) and/or sealing strips (12) made from elastic plastic material, directly injected to said shaft wall module.

## Revendications

1. Puits de distribution (S), pour plusieurs éléments filiformes (T₁, T₂, T₃), posés depuis l'extérieur vers au moins un point nodal (A) situé à l'intérieur du puits, en particulier des câbles, des tubes ou des tuyauteries, comportant une paroi de puits (W) présentant des ouvertures pour câbles (O), paroi composée de modules de parois de puits (M₁ à M₆) en matière synthétique, contenant des parties d'ouverture d'élément filiforme (4) et équipées de brides cintrées (5), plaquées les unes contre les autres en des joints (F) par des brides d'assemblage (2,3), et la paroi étant reliée, en faces supérieure et inférieure, à au moins une pièce de couronnement et à au moins une partie fond, **caractérisé en ce que** la paroi de puits (W) est formée d'au moins deux modules de parois de puits (M₁ à M₈) placés l'un au dessus de l' autre par leur bride d'assemblage (2, 3), modules délimitant, par leur parties d'ouverture d'élément filiforme (4) débouchant vers le joint (F), au moins une ouverture d'élément filiforme (O) commune, divisée par le joint (F), **en ce que**, en au moins deux parties d'ouverture (4), délimitant conjointement l'ouverture d'élément filiforme (O), est chaque fois prévue une demi-coque (B₁, B₂, B₁', B₂') en saillie sur le contour latéral extérieur du module de paroi de puits, délimitée par le joint (F), demi-coque montée dans la partie d'ouverture (4) ou réalisée d'un seule pièce avec celle-ci, et **en ce que** chaque module de paroi de puits (M₁ à M₈) est conformé en anneau à tracé rond ou polygonal (E, E₁ à E₃) avec un axe d'anneau orienté dans l'axe de puits (X), d'une seule pièce en direction périphérique, ou composé de segments d'anneau (G₂, G₃) assemblés les uns aux autres en direction périphérique par leurs brides de joint.

2. Puits de distribution (S) selon la revendication 1, **caractérisé en ce que** chaque fois au moins deux anneaux ou segments d'anneaux (G₂, G₃) sont composés, dans la direction de l'axe de puits, pour former un élément filiforme de paroi de puits (C), ayant des brides de joints (2, 3) supérieures et inférieures continues, et au moins une ouverture d'élément filiforme (O) commune, divisées par le joint (F).

3. Puits de distribution (S) selon la revendication 1, **caractérisé en ce que** des anneaux ou des segments d'anneaux (G₂, G₃), formant chaque fois au moins trois modules de paroi de puits (M₁, M₂, M₃, M₄), sont assemblés dans la direction de l'axe de puits (X) pour former un élément filiforme de paroi de puits, dont chaque fois un premier module de paroi de puits (M₁, M₃) présente au moins une partie d'ouverture d'élément filiforme (4) débouchant vers un deuxième module de paroi de puits (M₂, M₄), un deuxième module de paroi de puits (M₄) présente des parties d'ouverture d'éléments filiformes opposées les unes aux autres, débouchant vers le premier et le troisième module de paroi de puits (M₃), et le troisième module de paroi de puits (M₁, M₂, M₃) présente au moins une partie d'ouverture d'élément filiforme (4) débouchant vers le deuxième module de paroi de puits, et **en ce que** les modules de parois de puits assemblés délimitent au moins deux ouvertures d'éléments filiformes (O), situées l'une au-dessus de l'autre, divisées chacune par le joint (F) .

4. Puits de distribution (S) selon la revendication 3, **caractérisé en ce que** les parties d'ouverture d'élément filiforme (4) opposées les unes aux autres, débouchant vers les premiers et troisièmes modules de paroi de puits, du deuxième module de paroi de puits (M₄) sont disposées les unes au-dessus des autres dans la direction de l'axe de puits (X) dans le deuxième module de paroi de puits (M₄), ou bien sont décalés mutuellement en direction périphérique.

5. Puits de distribution (S)selon la revendication 1, **caractérisé en ce que** les deux demi-coque (B₁, B₂, B₁' , B₂'), séparées au niveau du joint (F), forment une tubulure (R) servant à maintenir un élément filiforme (T₁ à T₃), respectivement un tube vide (L) contenant l'élément filiforme.

6. Puits de distribution (S) selon la revendication 1, **caractérisé en ce que** des modules de paroi de puits, assemblés les unes aux autres par leurs brides de joint (2,3) dans la direction de l'axe de puits (X), sont centrés les unes aux autres par une liaison ajustement de forme, par l'intermédiaire d'éléments de centrage (Z), et serrés les unes contre les autres par des éléments de serrage de joints (K).

7. Puits de distribution (S) selon la revendication 6, **caractérisé en ce que** les éléments de serrage de joints (K) sont des coins de serrage ou des vis de serrage.

8. Puits de distribution (S) selon la revendication 1, **caractérisé en ce qu'**une ouverture d'élément filiforme (O) non occupée par un élément filiforme, dans la paroi de puits (O) , est fermée par un bouchon (P) démontable.

9. Module de paroi de puits en matière synthétique pour un puits de distribution (S) selon l'une des revendications 1 à 8, comportant une bride de joint (2, 3), située en côté bordure, et au moins une partie d'ouverture (4) ouverte à l'extrémité, entourant au maximum de 180° une ouverture d'élément filiforme (O) ronde, partie d'ouverture contenant une bride cintrée (5) assurant un revêtement, **caractérisé en ce que**, dans la partie d'ouverture (4), est prévue une demi-coque (B₁, B₂, B₁', B₂') à conformation d'une ..seule pièce ou insérée, placée en saillie sur le contour de paroi extérieure du module de paroi de puits.

10. Module de paroi de puits selon la revendication 9, **caractérisé en ce que** les brides de joint (2, 3) présentent des moyens d'étanchéité de joint (D) intégrés, ou des logements (7) pour des produits d'étanchéité pour joints (D).

11. Module de paroi de puits selon la revendication 9, **caractérisé en ce que** la demi coque (B₁, B₂, B₁', B₂') présente, dans la partie d'ouverture (4) et dans ses zones de bordures longitudinales, des moyens d'étanchéité pour joints (D) intégrés, ou des logements (7) pour des moyens d'étanchéité pour joints (D).

12. Module de paroi de puits selon la revendication 9, **caractérisé en ce que**, dans la bride cintrée et/ou intérieurement dans et/ou extérieurement sur la demi-coque (B₁, B₂, B₁', B₂') est disposé au moins une bande d'étanchéité (12), intégrée à demeure ou maintenue dans un logement (7), nervurée longitudinalement en forme de ruban, bande d'étanchéité s'étendant le long de la bride cintrée (5) et/ou de la demi-coque, en direction périphérique.

13. Module de paroi de puits selon la revendication 9, **caractérisé en ce que** le module de paroi de puits (M₁ à M₆) est une pièce moulée par injection en matière synthétique, ou une pièce moulée par centrifugation en fonte, et présente des moyens d'étanchéité pour joints (D) rapportés directement par injection et/ou des moyens d'étanchéité pour ouverture d'élément filiforme (D) et/ou des bandes d'étanchéité (12), réalisées en matière synthétique élastique.
